# EUROPÄISCHE PATENTANMELDUNG

(11) **EP 3 771 880 A1**
(43) Veröffentlichungstag der Anmeldung: **03.02.2021**
(21) Anmeldenummer: 20187656.2
(22) Anmeldetag: 24.07.2020
(51) Int. Cl.: F41J 1/01, C08J 5/18, F41J 7/02, F41J 13/02

(54) **ANORDNUNG ZUR TREFFERAUSWERTUNG IM SCHIESSSPORT**

(30) Priorität: 30.07.2019 DE 102019120571
(71) Anmelder: Intarso GmbH, 64739 Höchst im Odenwald (DE)
(72) Erfinder: Lechner, Gerhard, 51375 Leverkusen (DE); Dittmar, Oliver, 46562 Voerde (DE)
(74) Vertreter: Reiser & Partner Patentanwälte mbB

(57) **Zusammenfassung**

Anordnung zur Trefferauswertung im Schießsport, umfassend ein Gehäuse (2) mit einer Zielöffnung (3), wobei die Zielöffnung (3) durch eine Abdeckbahn (4) abgedeckt ist, wobei die Abdeckbahn (4) aus einer flächigen Lage, umfassend mineralische Partikel und Bindemittel, ausgebildet ist.

## Beschreibung

Die Erfindung betrifft eine Anordnung zur Trefferauswertung im Schießsport, umfassend ein Gehäuse mit einer Zielöffnung, wobei die Zielöffnung durch eine Abdeckbahn abgedeckt ist.

Derartige Anordnungen kommen insbesondere im Zusammenhang mit Druckluftwaffen zum Einsatz. Die Abdeckbahn bedeckt dabei die Zielöffnung des Gehäuses und wird von dem Projektil der Druckluftwaffe durchschlagen, wodurch das Projektil in das Innere des Gehäuses gelangt. Anschließend erfolgt eine Trefferauswertung. Diese kann entweder manuell oder automatisiert erfolgen.

Auf der Abdeckbahn kann eine Markierung in Form eines Spiegels mit Ringen angeordnet sein. Das durch einen Schuss aus der Waffe abgegebene Projektil durchschlägt die Abdeckbahn und gelangt dadurch in das Innere des Gehäuses. Dort wird das Projektil abgelenkt und/oder aufgefangen. Anschließend wird der Abschnitt der Abdeckbahn, welchen das Projektil durchschlagen hat, einer Auswertung zugeführt. Alternativ besteht die Möglichkeit, dass eine automatische Auswertung in Form einer elektronischen, akustischen oder optischen Auswertung des Treffers erfolgt. Bei einer automatischen Auswertung ist es nicht unbedingt erforderlich, die Position der durch das Projektil in die Abdeckbahn eingebrachte Öffnung gesondert auszuwerten.

Derzeit besteht die Abdeckbahn aus Papier oder Pappe basierend auf pflanzlichen Fasern, beispielsweise Cellulose. Hierbei ist nachteilig, dass die Pflanzenfasern verhältnismäßig lange Faserlängen aufweisen. Dies führt dazu, dass die Ränder der von dem Projektil erzeugten Durchtrittsöffnung nicht scharf abgegrenzt, sondern ausgefranst sind, wobei einzelne Fasern aus den Rändern hervorstehen. Dies erschwert die Trefferauswertung, insbesondere eine automatisierte Trefferauswertung.

Zwar wäre es prinzipiell möglich, ein Papier mit kurzen Fasern herzustellen. Dieses weist aber nur eine geringe Stabilität und eine hohe Bruchneigung auf. Daher kann ein derartiges kurzfaseriges Papier insbesondere nicht zu einer Rolle aufgewickelt werden.

Der Erfindung liegt die Aufgabe zugrunde, die Anordnung derart weiterzuentwickeln, dass eine höhere Genauigkeit bei der Trefferauswertung möglich ist.

Diese Aufgabe wird mit den Merkmalen von Anspruch 1 gelöst. Auf vorteilhafte Ausgestaltungen nehmen die Unteransprüche Bezug.

Die erfindungsgemäße Anordnung zur Trefferauswertung im Schießsport umfasst ein Gehäuse mit einer Zielöffnung, wobei die Zielöffnung durch eine Abdeckbahn abgedeckt ist, wobei die Abdeckbahn aus einer flächigen Lage, umfassend mineralische Partikel und Bindemittel ausgebildet ist.

Eine derartige flächige Lage wird auch als Steinpapier bezeichnet. Im Gegensatz zu Papier, welches aus Cellulosefasern besteht, ist das Grundmaterial des Steinpapiers aus Partikeln ausgebildet. Verfestigt wird das Steinpapier durch das Bindemittel. Dadurch ist es nicht erforderlich, Fasermaterial zu verwenden, insbesondere ist es nicht erforderlich, langfaseriges Fasermaterial zu verwenden. Ein Projektil, welches die aus Steinpapier ausgebildete Abdeckbahn durchschlägt, hinterlässt eine Durchtrittsöffnung mit einem scharf abgegrenzten Rand. Dies ermöglicht eine verbesserte Auswertung des Treffers und erhöht die Genauigkeit der Auswertung.

Auf die flächige Lage kann ein Muster in Form eines Spiegels mit konzentrisch angeordneten Ringen aufgedruckt sein, wobei das Muster konzentrisch in der Zielöffnung angeordnet ist.

Die Abdeckbahn kann als streifenförmige Lage ausgebildet sein. Dabei kann die Abdeckbahn insbesondere als langgestreckte, quasi unendliche, streifenförmige Lage ausgebildet sein. Eine derartige Abdeckbahn kann kontinuierlich oder schrittweise an der Zielöffnung entlanggeführt werden. Dadurch ist es nicht erforderlich, die Abdeckbahn nach jedem Schuss oder nach einer vorgegebenen Anzahl von Schüssen auszutauschen.

Die Abdeckbahn kann zu einer Rolle aufgewickelt sein und über eine Führung an der Zielöffnung entlanggeführt sein. Hierzu kann das Gehäuse einen Rollenhalter aufweisen. Dieser nimmt die zu einer Rolle aufgewickelte Abdeckbahn auf. Die Führung kann in Form von U-förmigen Führungen oder Schlitzen ausgebildet sein, welche beidseitig der Zielöffnung angeordnet sind. Durch die Führung ist sichergestellt, dass die Abdeckbahn der Zielöffnung zugeordnet ist. Zusätzlich können Federmittel vorgesehen sein, welche die Abdeckbahn im Bereich der Zielöffnung an das Gehäuse andrücken. Dadurch ist ein besonders dichter Abschluss der Zielöffnung durch die Abdeckbahn gegeben.

Die Abdeckbahn kann mineralische Partikel in Form von Calciumcarbonat enthalten. Calciumcarbonat ist eine Kalkverbindung und in großen Mengen kostengünstig verfügbar. Eine Ausgestaltung von Calciumcarbonat ist beispielsweise Kreide.

Der Binder kann ein Harz sein. Harze sind zumeist duroplastische Werkstoffe, welche nach Aushärtung einen festen Verbund bilden.

Der Binder kann ein Polyesterharz sein. Polyesterharze sind Kondensationsprodukte aus zwei- oder mehrwertigen Alkoholen und Dicarbonsäuren. Polyesterharze sind weitgehend resistent gegenüber schwachen Säuren und Basen sowie Benzin und Öl.

Die Abdeckbahn kann eine Dicke von 100 µm bis 140 µm und ein Flächengewicht von 120 g/m² bis 160 g/m² aufweisen. Besonders bevorzugt weist die Abdeckbahn eine Dicke von 120 µm auf. Dies entspricht der Dicke eines 80-g-Papiers, so dass die Abdeckbahn ein gewohntes Handling aufweist und in bereits bestehende Anordnungen montiert werden kann. Eine derartige Abdecklage weist jedoch ein Flächengewicht von 144 g/m² auf und hat dementsprechend im Vergleich zu Papier eine deutlich höhere Grammatur. Dies ist insbesondere bei der Verwendung als Abdeckbahn vorteilhaft, da eine derartige Abdeckbahn die Zielöffnung besonders dicht und stabil abschließt.

Dem Gehäuse kann eine Auswerteeinheit zur automatischen Trefferauswertung zugeordnet sein. Im Wettkampfsport ist eine automatische Trefferauswertung vorteilhaft, weil eine schnelle Rückmeldung und Auswertung des Treffers erfolgen kann. Es ist insbesondere nicht erforderlich, die Durchtrittsöffnung, welche das Projektil in die Abdeckbahn eingebracht hat, manuell zu prüfen und zu vermessen. Die automatische Trefferauswertung kann dabei beispielsweise optisch mittels einer Kamera erfolgen.

Gemäß einer vorteilhaften Ausgestaltung weist die Auswerteeinheit Schallsensoren zur akustischen Trefferauswertung auf. Bei dieser Ausgestaltung schließt das Gehäuse eine Schallkammer ein, welche im Bereich der Zielöffnung durch die Abdeckbahn dicht abgeschlossen ist. Tritt das Projektil durch die Abdeckbahn hindurch, kann durch Schallsensoren die Position des Projektils relativ zur Durchtrittsöffnung ermittelt werden. Auf dieser Basis erfolgt die Ermittlung der Ringzahl.

Durch die erfindungsgemäße Abdeckbahn, welche mineralische Partikel und Bindemittel umfasst, ist eine besonders genaue Ermittlung der Schusslage durch die Schallsensoren möglich. Durch die vergleichsweise hohe Grammatur, insbesondere bei der Verwendung einer Abdeckbahn mit der oben beschriebenen Dicke und dem oben beschriebenen Flächengewicht, ergibt sich eine besonders gute Schallentkopplung, so dass die Schallsensoren eine höhere Genauigkeit aufweisen.

Eine Ausgestaltung der erfindungsgemäßen Anordnung wird nachfolgend anhand der Figur näher erläutert. Diese zeigt schematisch:

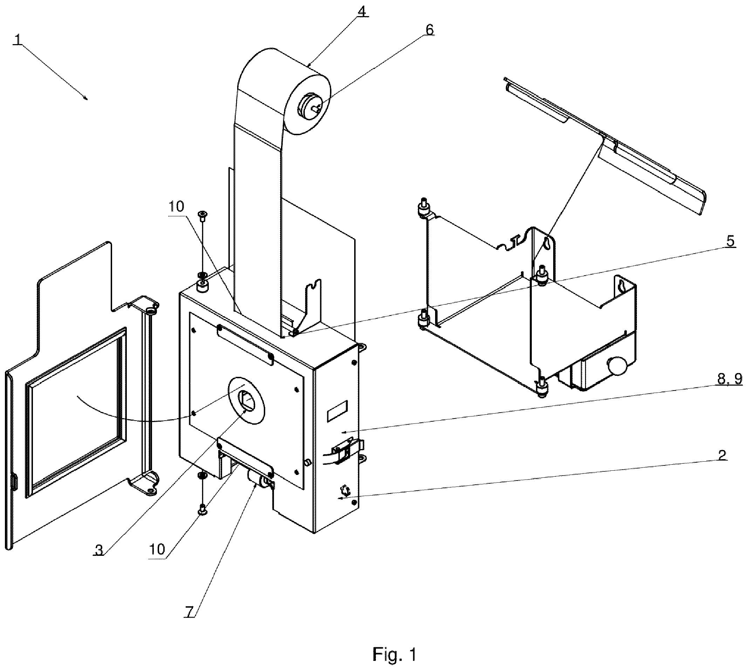

- Fig. 1: eine Anordnung als Explosionsdarstellung.

Figur 1 zeigt eine Anordnung 1 zur Trefferauswertung im Schießsport. Die Anordnung 1 umfasst ein Gehäuse 2 mit einer Zielöffnung 3. Das Gehäuse 2 ist kastenförmig und weist sechs aus Blech bestehende Wände auf, wobei in eine Wand die Zielöffnung 3 eingebracht ist.

Die Zielöffnung 3 ist durch eine Abdeckbahn 4 abgedeckt. Die Abdeckbahn 4 ist aus einer flächigen Lage, umfassend mineralische Partikel, vorliegend Calciumcarbonat, und Bindemittel, vorliegend Polyesterharz, ausgebildet.

Die Abdeckbahn 4 ist als streifenförmige Lage ausgebildet und zu einer Rolle aufgewickelt. An der Wand, welche die Zielöffnung 3 aufweist, ist auf der den anderen Wänden zugeordneten Seite, also auf der Innenseite, eine Führung 5 angeordnet, welche innerhalb des Gehäuses 2 zwei U-Profile aufweist, die beidseitig an der Zielöffnung 3 an der Wand angeordnet sind. Dem Gehäuse 2 ist ferner ein Rollenhalter 6 zugeordnet, welcher die zu einer Rolle aufgewickelte Abdeckbahn 4 aufnimmt.

Eine Zuführeinrichtung 7 mit einem Elektromotor führt die Abdeckbahn 4 über die Führung 5 an der Zielöffnung 3 entlang.

Die Abdeckbahn 4 weist eine Dicke von 120 µm und ein Flächengewicht von 144 g/m² auf.

Auf der dem Rollenhalter 6 zugeordneten und auf der dem Rollenhalter 6 gegenüberliegenden Seite des Gehäuses 2 ist jeweils ein Schlitz 10 in das Gehäuse 2 eingebracht, durch welchen die Abdeckbahn 4 in das Gehäuse 2 hinein- und aus dem Gehäuse 2 herausgeführt wird.

Dem Gehäuse 2 ist ferner eine Auswerteeinheit 8 zur automatischen Trefferauswertung zugeordnet. Die Auswerteeinheit 8 umfasst bei der vorliegenden Ausgestaltung Schallsensoren 9 zur akustischen Trefferauswertung. Die Schallsensoren 9 sind im Inneren des Gehäuses 2 angeordnet. Durchschlägt ein Projektil die Abdeckbahn 4, ermitteln die Schallsensoren 9 die Position des Projektils relativ zur Zielöffnung 3. Auf dieser Basis erfolgt schließlich die Ermittlung der Ringzahl.

Auf die Abdeckbahn 4 ist ein Aufdruck in Form eines Scheibenspiegels mit Ringen aufgedruckt. Die Zuführeinrichtung 7 ist dabei so eingerichtet, dass für jeden Schuss ein Scheibenspiegel konzentrisch in der Zielöffnung 3 angeordnet ist.

## Patentansprüche

1. Anordnung zur Trefferauswertung im Schießsport, umfassend ein Gehäuse (2) mit einer Zielöffnung (3), wobei die Zielöffnung (3) durch eine Abdeckbahn (4) abgedeckt ist, **dadurch gekennzeichnet, dass** die Abdeckbahn (4) aus einer flächigen Lage, umfassend mineralische Partikel und Bindemittel, ausgebildet ist.

2. Anordnung nach Anspruch 1, **dadurch gekennzeichnet, dass** die Abdeckbahn (4) als streifenförmige Lage ausgebildet ist.

3. Anordnung nach Anspruch 1 oder 2, **dadurch gekennzeichnet, dass** die Abdeckbahn (4) zu einer Rolle aufgewickelt ist und über eine Führung (5) an der Zielöffnung (3) entlanggeführt wird.

4. Anordnung nach einem der Ansprüche 1 bis 3, **dadurch gekennzeichnet, dass** die Abdeckbahn (4) mineralische Partikel in Form von Calciumcarbonat enthält.

5. Anordnung nach einem der Ansprüche 1 bis 4, **dadurch gekennzeichnet, dass** der Binder ein Harz ist.

6. Anordnung nach einem der Ansprüche 1 bis 5, **dadurch gekennzeichnet, dass** der Binder ein Polyesterharz ist.

7. Anordnung nach einem der Ansprüche 1 bis 6, **dadurch gekennzeichnet, dass** die Abdeckbahn (4) eine Dicke von 100 µm bis 140 µm und ein Flächengewicht von 120 g/m² bis 160 g/m² aufweist.

8. Anordnung nach einem der Ansprüche 1 bis 7, **dadurch gekennzeichnet, dass** die Abdeckbahn (4) eine Dicke von 120 µm und ein Flächengewicht von 144 g/m² aufweist.

9. Anordnung nach einem der Ansprüche 1 bis 8, **dadurch gekennzeichnet, dass** dem Gehäuse (2) eine Auswerteeinheit (8) zur automatischen Trefferauswertung zugeordnet ist.

10. Anordnung nach Anspruch 9, **dadurch gekennzeichnet, dass** die Auswerteeinheit (8) Schallsensoren (9) zur akustischen Trefferauswertung umfasst.
